(19) Europäisches Patentamt
European Patent Office
Office européen des brevets

(11) **EP 3 376 626 B1**

(12) **EUROPÄISCHE PATENTSCHRIFT**

(45) Veröffentlichungstag und Bekanntmachung des Hinweises auf die Patenterteilung:
**09.02.2022 Patentblatt 2022/06**

(21) Anmeldenummer: **17160518.1**

(22) Anmeldetag: **13.03.2017**

(51) Internationale Patentklassifikation (IPC):
**H02J 3/38** *(2006.01)* **H02J 3/46** *(2006.01)*
**H02J 3/48** *(2006.01)*

(52) Gemeinsame Patentklassifikation (CPC):
**H02J 3/48; H02J 3/381;** H02J 2300/28;
Y02E 10/72; Y02E 10/76

(54) **VERFAHREN ZUR REGELUNG DER WIRKLEISTUNGSABGABE EINES WINDPARKS SOWIE EIN SOLCHER WINDPARK**

METHOD FOR CONTROLLING THE POWER OUTPUT OF A WIND FARM AND CORRESPONDING WIND FARM

PROCÉDÉ DE RÉGLAGE DE LA PUISSANCE ACTIVE D'UN PARC ÉOLIEN ET UN TEL PARC ÉOLIEN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.09.2018 Patentblatt 2018/38**

(73) Patentinhaber: **Nordex Energy SE & Co. KG**
**22419 Hamburg (DE)**

(72) Erfinder:
• **Bode, Florian**
**22339 Hamburg (DE)**
• **Drossel, Detlef**
**22851 Norderstedt (DE)**

(74) Vertreter: **Hauck Patentanwaltspartnerschaft mbB**
**Postfach 11 31 53**
**20431 Hamburg (DE)**

(56) Entgegenhaltungen:
**DE-A1-102014 000 784 DE-A1-102014 000 790**

EP 3 376 626 B1

## Beschreibung

Die vorliegende Erfindung betrifft ein Verfahren zur Regelung der Wirkleistungsabgabe eines Windparks ebenso wie einen aus mindestens zwei Windenergieanlagen bestehenden Windpark.

Mit zunehmendem Einsatz von Windenergieanlagen, sei es an Land oder auf See, wird deren Bedeutung für das elektrische Versorgungsnetz größer. Im Hinblick auf die Einspeisung von Wirkleistung führt dies dazu, dass vorgegebene Sollwerte für die am Netzanschlusspunkt eingespeiste Wirkleistung möglichst exakt eingehalten werden sollen. Dies betrifft sowohl den stationären Zustand, bei dem, ausreichend Wind vorausgesetzt, ein konstanter Betrag an Wirkleistung eingespeist wird, wie auch das dynamische Verhalten, bei dem ein Sollwert für die einzuspeisende Wirkleistung sich zeitlich ändert.

Aus DE 10 2014 000 790 A1 ist eine Windparkregelung mit einem verbesserten Sollwertverhalten bekannt geworden. Der Windpark weist einen Parkmaster mit einem Leistungsregler zur Regelung der in dem Windpark enthaltenen Windenergieanlagen auf. Ein Sollwert für die Leistungsabgabe des Windparks liegt an dem Parkmaster an und wird als Sollwertsignal für die Leistungsabgabe der Windenergieanlagen ausgegeben. Die Sollwerte für die Windenergieanlagen werden bei einer Änderung des Sollwertsignals für den Windpark korrigiert, wobei der korrigierte Sollwert auf den Leistungsregler aufgeschaltet ist. Mit einem Prädiktor wird der Sollwert für die Windenergieanlage berechnet, wobei hier unterschiedliche Betriebszustände der Windenergieanlagen und unterschiedlich produzierte Leistung berücksichtigt werden.

Aus DE 10 2014 000 784 A1 ist ein Windpark mit Vorsteuerung im Leistungsregler bekannt geworden. Der Windpark besitzt einen Parkmaster, der zur Führung der Windenergieanlagen ausgebildet ist, wobei der Parkmaster einen Leistungsregler umfasst. Der Leistungsregler besitzt ein Vorsteuermodul, das ein Maß für die Sollleistung über ein Multiplikationsglied auf den Ausgang des Leistungsreglers aufschaltet. Hierdurch soll ein beschleunigtes Ansprechverhalten der Vorsteuerung bei einer Sollwertreduktion erzielt werden und ein gegenüber dem Betriebszustand des Windparks robustes Ansprechverhalten geschaffen werden.

Der Erfindung liegt die Aufgabe zugrunde, ein Regelungsverfahren für einen Windpark sowie einen Windpark anzugeben, die sowohl im stationären als auch im transienten Verhalten einer Sollwertvorgabe möglichst genau folgen.

Erfindungsgemäß wird die Aufgabe durch ein Verfahren mit den Merkmalen aus Anspruch 1 sowie einen Windpark mit den Merkmalen aus Anspruch 6 gelöst. Vorteilhafte Ausgestaltungen bilden die Gegenstände der Unteransprüche.

Das erfindungsgemäße Verfahren ist vorgesehen und bestimmt zur Regelung der Wirkleistungsabgabe eines Windparks mit mindestens zwei Windenergieanlagen, die Wirkleistung in ein Versorgungsnetz einspeisen. Ein Sollwert für die durch den Windpark abzugebende Wirkleistung liegt an einem Windparkmodell an, das einen modellierten Wirkleistungssollwert ermittelt. Der modellierte Wirkleistungssollwert bildet zusammen mit einem Istwert der Wirkleistung eine Regelabweichung für einen Leistungsregler. Zu einer Reglerstellgröße des Windparkreglers wird additiv eine Vorsteuerstellgröße hinzu addiert. Die Vorsteuerstellgröße ist unabhängig von Zuständen des Windparks und seinen Istwerten und hängt lediglich von dem Sollwert für die Wirkleistung des Windparks ab. Aus der Reglerstellgröße und der Vorsteuerstellgröße wird durch Addition eine Gesamtstellgröße für den Windpark gebildet.

Erfindungsgemäß wird eine Differenz aus dem Istwert der Wirkleistung und dem modellierten Wirkleistungssollwert bestimmt. Aus der Differenz wird ein Korrekturwert für die Bestimmung des modellierten Wirkleistungssollwerts erzeugt. Die Erfindung beruht auf der Erkenntnis, dass sich der modellierte Wirkleistungssollwert des Windparks abhängig von einer Abweichung vom Istwert der Wirkleistung und dem modellierten Wirkleistungssollwert korrigieren lässt, so dass Abweichungen im Modell, bedingt durch Betriebs- und Arbeitspunkte der Windenergieanlagen im Park, ausgeglichen werden können. Das Modell erzeugt mit dem modellierten Wirkleistungssollwert den Wert für die Wirkleistung, die der Windpark, ansprechend auf die Sollwertvorgabe, einspeisen würde. Bevorzugt kann durch diese Korrektur ein genaueres Anregelverhalten des Windparks erreicht werden, welcher externen Sollwertvorgaben dann genauer folgen kann. Rückwirkungen auf ein elektrisches Versorgungsnetz, in das der Windpark Leistung einspeist, können somit effektiv minimiert werden.

Erfindungsgemäß minimiert der Korrekturwert eine Abweichung zwischen dem modellierten Wirkleistungssollwert und dem Istwert der Wirkleistung des Windparks. Dadurch, dass der Korrekturwert auf der Differenz zwischen dem modellierten Wirkleistungssollwert und dem Istwert beruht, hängt der Korrekturwert von den Abweichungen des Modells vom realen Verhalten des Windparks bzw. der einzelnen Windenergieanlagen des Windparks ab. Liegt keine Abweichung vor, so ist der Korrekturwert Null und es erfolgt keine Korrektur des Modells.

In einer bevorzugten Ausgestaltung ist der Leistungsregler zum Ausregeln von Störungen ausgelegt. Durch die Vorsteuerung folgt der Istwert direkt dem Sollwert und der Leistungsregler kann zum Ausregeln von Störungen optimiert werden.

In einer weiteren bevorzugten Ausgestaltung wird mit dem Korrekturwert eine Abhängigkeit des modellierten Wirkleistungssollwertes von einem Betriebspunkt des Windparks korrigiert. Das dem modellierten Wirkleistungssollwert zugrundeliegende Modell des Windparks ist weitestgehend von einem Betriebspunkt, wie beispielsweise dem Istwert der eingespeisten Wirkleistung, unabhängig. Durch den Korrekturwert kann eine verbleibende Abhängigkeit von dem Betriebspunkt in dem Modell aufgelöst werden.

In einer bevorzugten Ausgestaltung ist das Verfahren so ausgelegt, dass im eingeschwungenen Zustand, wenn der modellierte Wirkleistungssollwert und der Istwert der Wirkleistung übereinstimmen, die Gesamtstellgröße den Wert Null annimmt. Indem dann die Gesamtstellgröße den Wert Null aufweist, erfolgt ein Ausregeln der in dem Windpark auftretenden Störungen. Eine Übertragungsfunktion der Führungsgröße ist damit von der Störübertragungsfunktion entkoppelt.

In einer bevorzugten Ausgestaltung werden Filter, beispielsweise zur zeitlichen Glättung des modellierten Wirkleistungssollwerts als auch des Istwerts für die Wirkleistung eingesetzt.

Die erfindungsgemäße Aufgabe wird ebenfalls durch einen Windpark mit den Merkmalen aus Anspruch 6 gelöst.

Der erfindungsgemäße Windpark weist mindestens zwei Windenergieanlagen und einen Windparkregler auf. Der Windparkregler besitzt einen Leistungsregler, der eingerichtet ist eine Reglerstellgröße für die Wirkleistung des Windparks zu bilden. Der Windparkregler besitzt weiterhin eine Vorsteuerung, die eingerichtet ist unabhängig von Zuständen des Windparks und seinen Istwerten eine Vorsteuerstellgröße zu bilden. Ferner besitzt der Windparkregler ein Modell, das eingerichtet ist aus einem Sollwert für die Wirkleistung des Windparks einen modellierten Wirkleistungssollwert zu bestimmen. Der modellierte Wirkleistungssollwert liegt an einem Leistungsregler an, der eine Reglerstellgröße ausgibt. In dem erfindungsgemäßen Windparkregler wird die Vorsteuerstellgröße additiv zu der Reglerstellgröße an den Leistungsregler angelegt. Der Windparkregler hat ferner ein Korrekturmodul, an dem eine Differenz von modelliertem Wirkleistungssollwert und Istwert der Wirkleistung anliegt. Das Korrekturmodul ist eingerichtet einen Korrekturwert für das Modell, mit dem der modellierte Wirkleistungssollwert bestimmt wird, bereitzustellen. Der besondere Vorteil an dem Windpark und seinem Windparkregler liegt darin, dass der Leistungsregler auf ein Ausregeln von Störgrößen ausgelegt werden kann, während die Vorsteuerung Änderungen in dem Sollwert ausgleicht. Zudem wird durch den Korrekturwert eine Abweichung zwischen dem modellierten Wirkleistungssollwert und dem Istwert der Wirkleistung minimiert. Insbesondere auch bei transienten Zuständen des Windparks, bei denen der Sollwert der einzuspeisenden Wirkleistung sich sprunghaft oder entlang einer Rampe geändert hat, wird durch den Korrekturwert das Modell zur Bestimmung des modellierten Wirkleistungssollwerts angepasst werden. Die Vorsteuerung führt den Windpark entlang dem Sollwert, während der Leistungsregler so ausgelegt ist, dass Störgrößen bei der Bereitstellung der Wirkleistung durch den Windpark ausgeglichen werden.

In einer bevorzugten Ausgestaltung sind ein oder mehrere Filter für den modellierten Wirkleistungssollwert und/oder den Istwert der Wirkleistung vorgesehen. Über die Filter können beispielsweise kurzfristige, d. h. hochfrequente Schwankungen ausgeblendet werden.

In einer weiter bevorzugten Ausgestaltung teilt der Windparkregler die gesamte Stellgröße auf Einzelstellgrößen für Leistungsregler der in dem Windpark enthaltenen Windenergieanlagen auf. Die Aufteilung kann dabei spezifische Größen der Windenergieanlagen, wie beispielsweise Istwerte der Leistung, Regelungsreserve, erfasste Windgeschwindigkeit berücksichtigen.

Die Erfindung wird nachfolgend an einem bevorzugten Ausführungsbeispiel erläutert. Es zeigen:

Fig. 1     eine schematische Ansicht eines Windparkreglers mit einfacher Vorsteuerung,

Fig. 2     eine schematische Ansicht eines Windparkreglers mit Vorsteuerung und Modell des Windparks, und

Fig. 3     einen beispielhaften Verlauf der Wirkleistung mit Vorsteuerung mit und ohne Modell.

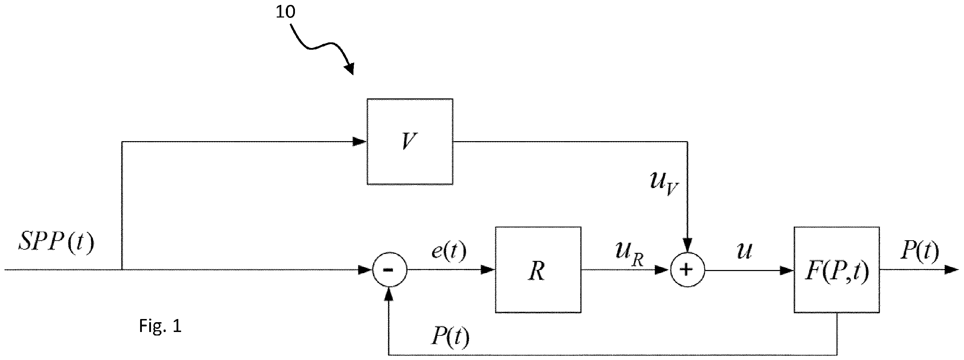

Fig. 1 zeigt eine schematische Ansicht eines Windparkreglers 10 mit einfacher Vorsteuerung. Die Eingangsgröße bildet der zeitabhängig vorgegebene Sollwert SPP(t) für die abzugebende Wirkleistung. Der Sollwert liegt an einer Vorsteuerung V an, die hieraus eine Vorsteuerstellgröße $u_V$ ermittelt. Gleichzeitig liegt der zeitabhängige Sollwert SPP(t) zusammen mit dem Istwert der Wirkleistung P(t) an einem Subtraktionsglied an, das eine Regelabweichung e(t) bildet. Die Regelabweichung e(t) liegt an einem Leistungsregler R an. Dieser erzeugt eine Reglerstellgröße $u_R$. Ausgangsgröße des Leistungsregler R ist die Reglerstellgröße $u_R$. Die Vorsteuerstellgröße $u_V$ und die Reglerstellgröße $u_R$ liegen an einem Additionsglied an und werden durch dieses zu einer Gesamtstellgröße u addiert. Die Gesamtstellgröße u liegt an der Regelstrecke F(P,t) an. Die Regelstrecke bildet hierbei der Windpark, wobei die Gesamtstellgröße u auf die einzelnen Windenergieanlagen im Windpark aufgeteilt wird. Die Aufteilung kann beispielsweise anhand einer von den einzelnen Windenergieanlagen als verfügbar gemeldete Wirkleistung erfolgen. Für die Beschreibung der Ausführungsbeispiele kann davon ausgegangen werden, dass eine geeignete Aufteilung in der Regelstrecke F(P,t) umfasst ist.

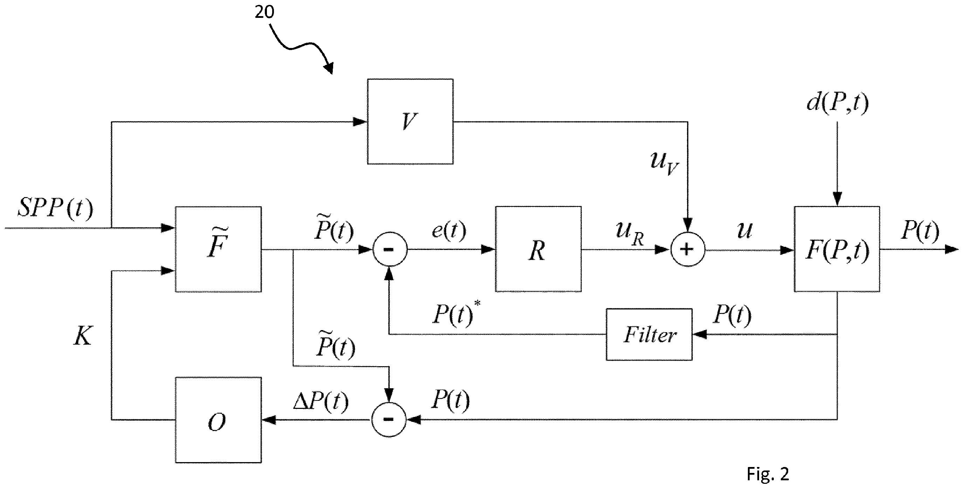

Der erfindungsgemäße Windparkregler 20 ist in Fig. 2 schematisch dargestellt. Die Eingangsgröße SPP(t) bildet eine Sollwertvorgabe, die über die Vorsteuerung V in eine Vorsteuerregelgröße $u_V$ umgesetzt wird. Zugleich liegt der vorgegebene Sollwert SPP(t) an einem Modell des Windparks $\tilde{F}$ an. Das Modell des Windparks erzeugt einen modellierten Wirkleistungssollwert $\tilde{P}(t)$. Dieser modellierte Wirkleistungssollwert wird durch ein Subtraktionsglied von dem Istwert der Wirkleistung P(t) subtrahiert, so dass ein Regelabweichung e(t) entsteht.

In einer bevorzugten Ausführung liegt an dem zuvor genannten Subtraktionsglied anstelle des Istwerts der Wirkleistung P(t) ein gefilterter Wert P(t)* des Istwerts der Wirkleistung P(t) an. Der gefilterte Wert kann von einem geeigneten Filter bereitgestellt werden, der vorgesehen ist, kurzfristige, d. h. hochfrequente Schwankungen eines an dem Filter anliegenden Istwerts der Wirkleistung P(t) zu glätten. Der Regelabweichung e(t) liegt an einem Leistungsregler R, der eine Reglerstellgröße $u_R$ erzeugt. Beide Stellgrößen werden durch ein Additionsglied zu einer Gesamtstellgröße u addiert, die als Sollwert an dem Windpark F(P,t) als Regelstrecke anliegt. Der Windpark setzt, analog zu Fig. 1, die Gesamtstellgröße u in die abzugebende Wirkleistung P(t) um. Bei diesem Ansatz mit einer Vorsteuerung werden Störgrößen d(P,t) direkt über den Leistungsregler R ausgeregelt. Als typische Störgrößen seien beispielsweise zeitliche Änderungen in Windgeschwindigkeit und/oder Windrichtung genannt, die das Verhalten der einzelnen Windenergieanlagen des Windparks beeinflussen.

Der Istwert der Windpark-Wirkleistung P(t) liegt ebenfalls an einem weiteren Subtraktionsglied an, an dem auch der modellierte Wirkleistungssollwert $\tilde{P}$(t) anliegt. Das Subtraktionsglied stellt eine Wirkleistungsdifferenz ∆P(t) von Ist- und Sollwert bereit. Die Differenz beider Wirkleistungswerte ∆P(t) liegt an einem Korrekturmodul O an. Das Korrekturmodul O erzeugt einen Korrekturwert K, der an dem Modell des Windparks $\tilde{F}$ anliegt. Die Korrekturwerte K verändern die Einstellung des Modells $\tilde{F}$ derart, dass die Größe ∆P(t) zu Null wird. Durch das Modell des Windparks $\tilde{F}$, das eine inverse Regelungsstrecke für die Wirkleistungsregelung des Windparks nachbildet und das Korrekturmodell O können die abgegebenen Wirkleistungswerte näher an den Sollwerten SPP(t) geführt werden, insbesondere können Überschwinger vermieden werden. Da der Beobachter O vorgesehen ist, dass Verhalten des Windparks möglichst exakt nachzubilden, ist es sinnvoll, für die Bildung von ∆P(t) einen ungefilterten Wert der Windpark-Wirkleistung P(t) bereitzustellen.

Bei dem Regelungsverfahren wird insgesamt ein Wirkleistungssollwert SPP(t) über einen zusätzlichen Pfad am eigentlichen Leistungsregler vorbeigeführt. Dadurch ergibt sich über die Vorsteuerung V eine Vorsteuerstellgröße $u_V$. Zusammen mit der Reglerstellgröße $u_R$ wird additiv die Gesamtstellgröße u ermittelt.

Sprünge, die im Sollwert auftreten, werden über die Vorsteuerung direkt auf die Regelstrecke und in diesem Fall auf den Windpark F(P,t) gegeben. Der erhöhte Sollwert an dem Stellglied führt auf diese Weise zu einer potenziell kürzeren Regelzeit.

Für ein verbessertes Einschwenkverhalten auf einen Plateauwert wird das interne Modell $\tilde{F}$ verwendet. Vor Bildung der Regelabweichung e(t) wird der Sollwert SPP(t) auf ein Modell der Regelstrecke $\tilde{F}$ gegeben. Die Regelabweichung e(t) ergibt sich also durch:

$$e(t) = SPP(t) * \tilde{F}(P,t) - P(t).$$

Ist das Modell identisch mit der realen (inversen) Regelstrecke, so ist im eingeschwungenen Zustand der Ausgang des Leistungsreglers $u_R$ = 0. Ändert sich der Sollwert SPP(t) und ist das zeitliche Verhalten von F(P,t) und $\tilde{F}$(P,t) identisch, so bleibt die Regelabweichung weiterhin bei null. Dies bedeutet, die Dynamik des Reglers hat keinen Einfluss auf das Führungsverhalten.

Da der Windpark als Strecke nicht exakt abgebildet werden kann und sich das Übertragungsverhalten in Abhängigkeit des Betriebspunktes der einzelnen Windenergieanlagen ändert, muss ein Fehler des Modells kompensiert werden. Hierzu wird ein Modellfehler für eine konstante Korrekturfunktion O auf das Modell zurückgekoppelt. Der Einfluss von Störgrößen d(P,t) im Windpark führt zu einer Regelabweichung e(t), die durch den Leistungsregler ausgeglichen wird.

Durch das Verfahren der Vorsteuerung ist es möglich, die Führungsübertragungsfunktion von der Störübertragungsfunktion zu entkoppeln. Die Regelgröße folgt direkt dem Sollwert und der Leistungsregler kann auf die Ausregelung von Störungen optimiert werden. Sollwertvorgaben kann damit insgesamt exakter gefolgt und Abweichungen im stationären Zustand vermieden werden. Dabei wird die Ausregelzeit reduziert.

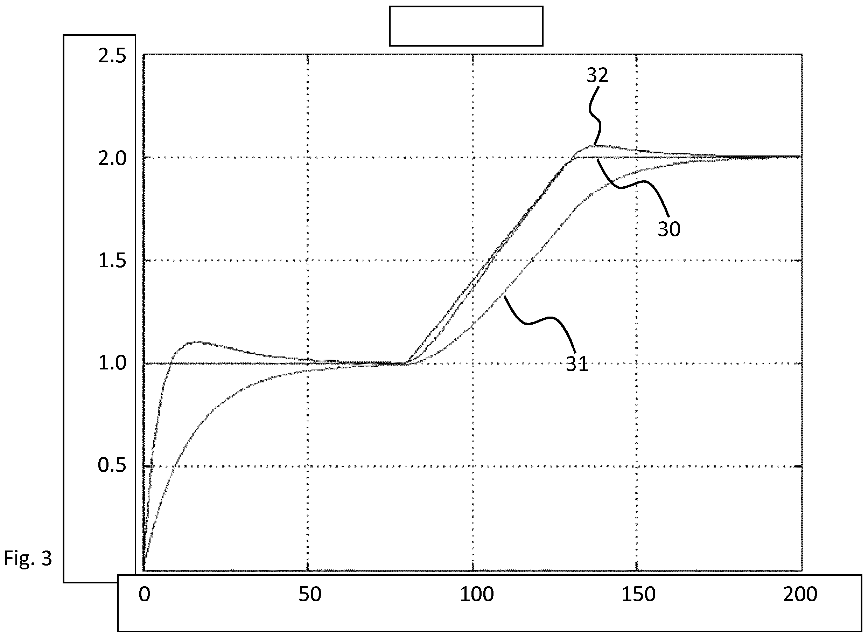

Fig. 3 zeigt den Verlauf des Sollwerts der Wirkleistung eines Windparks 30 über der Zeit, sowie den Verlauf des Istwerts der Wirkleistung des Windparks 31 unter Verwendung einer einfachen Vorsteuerung nach Fig. 1 und den Verlauf des Istwerts der Wirkleistung des Windparks 32 gemäß Fig. 2 bzw. mit dem erfindungsgemäßen Regelungsverfahren basierend auf einer Vorsteuerung und einem Windparkmodell. Die horizontale Zeitachse ist in Sekunden aufgetragen, die vertikale Achse für die Wirkleistung ist in beliebigen Einheiten aufgetragen. Die Sollwertvorgabe SPP(t) 30 steigt ungefähr zum Zeitpunkt 80 linear von dem Wert 1 auf den Wert 2 an, wo sie weiter konstant bis ungefähr zum Zeitpunkt 200 bleibt. Deutlich zu erkennen ist, dass in dem Bereich, in dem der Sollwert der Wirkleistung 30 von 1 auf 2 ansteigt, der Istwert der Wirkleistung mit einfacher Vorsteuerung 31 deutlich unter dem Sollwert zurückbleibt. Fig. 3 zeigt ebenfalls den Einfluss der Vorsteuerung und der Verwendung des Windparkmodells auf den Sollwertverlauf 32. Deutlich zu erkennen ist, dass der mit der Vorsteuerung erzielte Istwert 32 im linearen Steigungsbereich deutlich dem Sollwert 30 folgt. Auch zu erkennen ist, dass beim Übergang des Sollwerts auf den Plateauwert 2 lediglich ein sehr geringer Überschwinger auftritt, indem die bereitgestellte Wirkleistung des Windparks größer als der vorgegebene Sollwert ist.

Bezugszeichenliste

| 10 | Windparkregler |
|---|---|
| 20 | Windparkregler |
| O | Korrekturmodul |
| R | Leistungsregler |
| $\tilde{F}$ | Modell des Windparks |
| V | Vorsteuerung |
| F(P,t) | Regelstrecke |
| SPP(t) | vorgegebener Wirkleistungssollwert des Windparks |
| $\tilde{P}(t)$ | modellierter Wirkleistungssollwert |
| P(t) | Istwert der Wirkleistung des Windparks |
| P(t)* | gefilterter Istwert der Wirkleistung des Windparks |
| e(t) | Regelabweichung |
| ΔP(t) | Wirkleistungsdifferenz |
| K | Korrekturwert |
| $u_V$ | Vorsteuerstellgröße |
| $u_R$ | Reglerstellgröße |
| u | Gesamtstellgröße für den Wirkleistungssollwert des Windparks |
| d(P,t) | Störgröße |
| 30 | Sollwerts der Wirkleistung eines Windparks (SPP(t)) |
| 31 | Istwerts der Wirkleistung des Windparks (P(t)) mit einfacher Vorsteuerung |
| 32 | Istwerts der Wirkleistung des Windparks (P(t)) mit Vorsteuerung und Windparkmodell[HA1] |

**Patentansprüche**

1. Verfahren zur Regelung einer Wirkleistung in einem Windpark (F(P,t)) mit mindestens zwei Wirkleistung einspeisenden Windenergieanlagen, wobei ein Sollwert für die Wirkleistung (SPP(t)) des Windparks an einem Windparkmodell ($\tilde{F}$) anliegt, das einen modellierten Wirkleistungssollwert ($\tilde{P}(t)$) ermittelt, der zusammen mit einem Istwert der Wirkleistung (P(t)) eine Regelabweichung (e(t)) für einen Leistungsregler (R) bildet, dessen Reglerstellgröße ($u_R$) additiv mit einer unabhängig von Zuständen des Windparks (F(P,t)) und von seinen Istwerten bestimmten Vorsteuerstellgröße (uv) beaufschlagt wird, und eine Gesamtstellgröße (u) für den Windpark (F(P,t)) bildet,
**dadurch gekennzeichnet, dass**
das Windparkmodell ($\tilde{F}$) ein Modell der vom Windpark gebildeten Regelstrecke (F(P,t)) ist und ein Korrekturwert (K) für die Bestimmung des modellierten Leistungssollwerts ($\tilde{P}(t)$), abhängig von einer Differenz aus dem Istwert der Wirkleistung (P(t)) und dem modellierten Wirkleistungssollwert ($\tilde{P}(t)$), von einem Korrekturmodul (O) erzeugt wird und an dem Windparkmodell ($\tilde{F}$) anliegt, wobei der Korrekturwert (K) von dem Korrekturmodul (O) derart erzeugt wird, dass eine Abweichung zwischen dem modellierten Wirkleistungssollwert ($\tilde{P}(t)$) und dem Istwert der Wirkleistung (P(t)) minimiert wird.

2. Verfahren nach Anspruch 1, **dadurch gekennzeichnet, dass** der Leistungsregler (R) zum Ausregeln von Störungen (d(P,t)) ausgelegt ist.

3. Verfahren nach Anspruch 1 oder 2, **dadurch gekennzeichnet, dass** mit dem Korrekturwert (K) eine Abhängigkeit des modellierten Wirkleistungssollwerts ($\tilde{P}(t)$) von einem Betriebspunkt des Windparks (F(P,t)) korrigiert wird.

4. Verfahren nach einem der Ansprüche 1 bis 3, **dadurch gekennzeichnet, dass** im eingeschwungenen Zustand, wenn der modellierte Wirkleistungssollwert ($\tilde{P}(t)$) und der Istwert der Wirkleistung (P(t)) übereinstimmen, die Reglerstellgröße ($u_R$) verschwindet.

5. Verfahren nach einem der Ansprüche 1 bis 4, **dadurch gekennzeichnet, dass** der modellierte Wirkleistungssollwert ($\tilde{P}(t)$) und/oder der Istwert für die Wirkleistung (P(t)) gefiltert werden.

6. Windpark (F(P,t)) mit mindestens zwei Windenergieanlagen und einem Windparkregler (20), der

     einen Leistungsregler (R), eingerichtet eine Reglerstellgröße ($u_R$) für die von dem Windpark (F(P,t)) abzugebende Wirkleistung zu bilden, eine Vorsteuerung (V), eingerichtet unabhängig von Zuständen des Windparks (F(P,t)) und seinen Istwerten eine Vorsteuerstellgröße (uv) zu ermitteln, und
     ein Modell ($\tilde{F}$), eingerichtet aus einem Sollwert für die Wirkleistung (SPP(t)) für den Windpark (F(P,t)) einen modellierten Wirkleistungssollwert ($\tilde{P}(t)$) zu bestimmen, aufweist,

wobei die Vorsteuerstellgröße (uv) additiv zu der Reglerstellgröße ($u_R$) als eine Gesamtstellgröße (u) an dem Windpark (F(P,t)) anliegt,
**dadurch gekennzeichnet, dass**
das Windparkmodell ($\tilde{F}$) ein Modell der vom Windpark gebildeten Regelstrecke (F(P,t)) ist und der Windparkregler (20) ein Korrekturmodul (O) hat, an dem eine Differenz von modelliertem Wirkleistungswert ($\tilde{P}(t)$) und Istwert der Wirkleistung (P(t)) anliegt und das eingerichtet ist einen Korrekturwert (K) für das Windparkmodell ($\tilde{F}$) bereitzustellen, der eine Abweichung des modellierten Wirkleistungssollwerts ($\tilde{P}(t)$) von dem Istwert der Wirkleistung (P(t)) minimiert.

7. Windpark nach Anspruch 6, **dadurch gekennzeichnet, dass** der Leistungsregler (R) ausgelegt ist, um Störungen (d(P,t)) auszugleichen.

8. Windpark nach Anspruch 6 oder 7, **dadurch gekennzeichnet, dass** ein oder mehrere Filter für den

modellierten Wirkleistungswert ($\tilde{P}$(t)) und/oder den Istwert der Wirkleistung (P(t)) vorgesehen sind.

9. Windpark nach einem der Ansprüche 6 bis 8, **dadurch gekennzeichnet, dass** der Windparkregler (20) eingerichtet ist, die Gesamtstellgröße (u) auf Einzelstellgrößen für Leistungsregler der Windenergieanlagen aufzuteilen.

**Claims**

1. A method for controlling an active power output in a wind farm (F(P,t)), having at least two wind turbines supplying active power, wherein a nominal value for the active power (SPP(t)) of the wind farm is applied to a wind farm model ($\tilde{F}$) which establishes a modeled active power setpoint value ($\tilde{P}$(t)) which, together with an actual value of the active power (P(t)), forms a control deviation (e(t)) for a power controller (R), the controller setpoint value ($u_R$) of which is in addition supplied with a feed-forward control variable (uv) determined independently of conditions of the wind farm (F(P,t)) and of its actual values, and forms a total setpoint value (u) for the wind farm (F(P,t)), **characterized in that** the wind farm model ($\tilde{F}$) is a model of the controlled system (F(P,t)) formed by the wind farm and a correction value (K) for the determination of the modeled power setpoint value ($\tilde{P}$(t)), depending on a difference of the actual value of the active power (P(t)) and the modeled active power setpoint value ($\tilde{P}$(t)), is generated by a correction module (O) and is applied to the wind farm model ($\tilde{F}$), wherein the correction value (K) is generated by the correction module (O) in such a manner that a deviation between the modeled active power setpoint value ($\tilde{P}$(t)) and the actual value of the active power (P(t)) is minimized.

2. The method according to Claim 1, **characterized in that** the power controller (R) is configured to compensate disturbances (d(P,t)).

3. The method according to Claim 1 or 2, **characterized in that** a dependence of the modeled active power setpoint value ($\tilde{P}$(t)) on an operating point of the wind farm (F(P,t)) is corrected with the correction value (K).

4. The method according to any one of Claims 1 to 3, **characterized in that** in the settled condition, if the modeled active power setpoint value ($\tilde{P}$(t)) and the actual value of the active power (P(t)) coincide, the controller setpoint value ($u_R$) disappears.

5. The method according to any one of Claims 1 to 4, **characterized in that** the modeled active power setpoint value ($\tilde{P}$(t)) and/or the actual value for the active power (P(t)) are filtered.

6. A wind farm (F(P,t)) having at least two wind turbines and a wind farm controller (20), which has

   a power controller (R) configured to generate a controller setpoint value (UR) for the active power output to be supplied by the wind farm (F(P,t)),
   a feed-forward control (V), configured to generate a feed-forward control variable (uv) independently of conditions of the wind farm (F(P,t)) and its actual values, and
   a model ($\tilde{F}$), configured to determine a modeled active power setpoint value (P(t)) from a setpoint value for the active power (SPP(t)) for the wind farm (F(P,t)),
   wherein the feed-forward control variable ($u_v$) is applied, in addition to the controller setpoint value ($U_R$), as a total setpoint value (u) to the wind farm (F(P,t)),
   **characterized in that**
   the wind farm model ($\tilde{F}$) is a model of the controlled system (F(P,t)) formed by the wind farm and the wind farm controller (20) has a correction module (O), to which a difference of the modeled active power value ($\tilde{P}$(t)) and the actual value of the active power (P(t)) is applied, and which is configured to provide a correction value (K) for the wind farm model ($\tilde{F}$), which minimizes a deviation of the modeled active power setpoint value ($\tilde{P}$(t)) from the actual value of the active power (P(t)).

7. The wind farm according to Claim 6, **characterized in that** the power controller (R) is configured to compensate faults (d(P,t)).

8. The wind farm according to Claim 6 or 7, **characterized in that** one or more filters are provided for the modeled active power value ($\tilde{P}$(t)) and/or the actual value of the active power (P(t)).

9. The wind farm according to any one of Claims 6 to 8, **characterized in that** the wind farm controller (20) is configured to distribute the total setpoint value (u) to individual setpoint values for power controllers of the wind turbines.

**Revendications**

1. Procédé de réglage de la puissance active dans un parc éolien (F(P,t)) comprenant au moins deux éoliennes produisant une puissance active, dans lequel une valeur de consigne pour la puissance active (SPP(t)) du parc éolien s'applique à un modèle de parc éolien ($\tilde{F}$) définissant une valeur de consigne de puissance active modélisée ($\tilde{P}$(t)), laquelle cons-

titue, ensemble avec une valeur réelle de la puissance active (P(t)), un écart de réglage (e(t)) pour un régulateur de puissance (R), dont la grandeur de commande de régulateur ($u_R$) est appliquée additivement avec une grandeur de commande pilote (uv) déterminée indépendamment d'états du parc éolien (F(P,t)) et de ses valeurs réelles, et constitue une grandeur de commande globale (u) pour le parc éolien (F(P,t)),
**caractérisé en ce que**
le modèle de parc éolien ($\tilde{F}$) est un modèle du système réglé (F(P,t)) formé par le parc éolien, et une valeur de correction (K) est générée par un module de correction (O) en fonction d'une différence entre la valeur réelle de la puissance active (P(t)) et la valeur de consigne de puissance active modélisée ($\tilde{P}$(t)) pour la détermination de la valeur de consigne de puissance active modélisée ($\tilde{P}$(t)) et appliquée au modèle de parc éolien ($\tilde{F}$), la valeur de correction (K) étant générée de telle façon par le module de correction (O), qu'un écart entre la valeur de consigne de puissance active modélisée ($\tilde{P}$(t)) et la valeur réelle de la puissance active (P(t)) est minimisé.

2. Procédé selon la revendication 1, **caractérisé en ce que** le régulateur de puissance (R) est conçu pour la régulation de perturbations (d(P,t)).

3. Procédé selon la revendication 1 ou 2, **caractérisé en ce que** la valeur de correction (K) permet de corriger une dépendance de la valeur de consigne de puissance active modélisée ($\tilde{P}$(t)) vis-à-vis d'un point de fonctionnement du parc éolien (F(P,t)).

4. Procédé selon l'une des revendications 1 à 3, **caractérisé en ce que** dans l'état stabilisé, lorsque la valeur de consigne de puissance active modélisée ($\tilde{P}$(t)) et la valeur réelle de la puissance active (P(t)) coïncident, la grandeur de commande de régulateur ($u_R$) disparaît.

5. Procédé selon l'une des revendications 1 à 4, **caractérisé en ce que** la valeur de consigne de puissance active modélisée ($\tilde{P}$(t)) et/ou la valeur réelle pour la puissance active (P(t)) sont filtrées.

6. Parc éolien (F(P,t)) comprenant au moins deux éoliennes et un régulateur de parc éolien (20), lequel présente

    - un régulateur de puissance (R) configuré pour établir une grandeur de commande de régulateur ($u_R$) pour la puissance active à fournir par le parc éolien (F(P,t)),
    - un commande pilote (V) configurée pour définir une grandeur de commande pilote (uv) indépendamment d'états du parc éolien (F(P,t)) et de ses valeurs réelles, et

    - un modèle ($\tilde{F}$) configuré pour déterminer une valeur de consigne de puissance active modélisée ($\tilde{P}$(t)) pour le parc éolien (F(P,t)) à partir d'une valeur de consigne pour la puissance active (SPP(t)),

    dans lequel la grandeur de commande pilote (uv) s'applique conjointement avec la grandeur de commande de régulateur ($u_R$) au parc éolien (F(P,t)) en tant que grandeur de commande globale (u),
    **caractérisé en ce que**

    - le modèle de parc éolien ($\tilde{F}$) est un modèle du système réglé (F(P,t)) formé par le parc éolien, et le régulateur de parc éolien (20) possède un module de correction (O) auquel est appliquée une différence entre la valeur de consigne de puissance active modélisée ($\tilde{P}$(t)) et la valeur réelle de la puissance active (P(t)) et lequel est configuré pour fournir une valeur de correction (K) pour le modèle de parc éolien ($\tilde{F}$), laquelle minimise un écart de la valeur de consigne de puissance active modélisée ($\tilde{P}$(t)) par rapport à la valeur réelle de la puissance active (P(t)).

7. Parc éolien selon la revendication 6, **caractérisé en ce que** le régulateur de puissance (R) est conçu pour compenser des perturbations (d(P,t)).

8. Parc éolien selon la revendication 6 ou 7, **caractérisé en ce qu'**il est prévu un ou plusieurs filtres pour la valeur de consigne de puissance active modélisée ($\tilde{P}$(t)) et/ou la valeur réelle de la puissance active (P(t)).

9. Parc éolien selon l'une des revendications 6 à 8, **caractérisé en ce que** le régulateur de parc éolien (20) est configuré pour diviser la grandeur de commande globale (u) en grandeurs de commande individuelles pour le régulateur de puissance des éoliennes.

Fig. 1

Fig. 2

Fig. 3

**IN DER BESCHREIBUNG AUFGEFÜHRTE DOKUMENTE**

**In der Beschreibung aufgeführte Patentdokumente**

- DE 102014000790 A1
- DE 102014000784 A1